# EUROPÄISCHE PATENTSCHRIFT

(11) **EP 1 620 705 B1**
(45) Veröffentlichungstag und Bekanntmachung des Hinweises auf die Patenterteilung: **25.10.2006**
(21) Anmeldenummer: 04730154.4
(22) Anmeldetag: 29.04.2004
(51) Int. Cl.: G01M 3/12

(54) **VERFAHREN ZUR PRÜFUNG DER DICHTHEIT VON HOHLRÄUME ENTHALTENDEN BAUTEILEN**
METHOD FOR TESTING THE IMPERMEABILITY OF COMPONENTS THAT CONTAIN CAVITIES
PROCEDE POUR CONTROLER L'ETANCHEITE DE COMPOSANTS COMPORTANT DES CAVITES

(30) Priorität: 29.04.2003 AT 6572003
(43) Veröffentlichungstag der Anmeldung: 01.02.2006
(73) Patentinhaber: Fischer Advanced Composite Components AG, 4910 Ried im Innkreis (AT)
(72) Erfinder: HÖLLER, Helmuth, A-4720 Kallham (AT); STEPHAN, Walter, A., A-4973 St. Martin (AT)
(74) Vertreter: Sonn & Partner Patentanwälte
(86) Internationale Anmeldenummer: PCT/AT2004/000143
(87) Internationale Veröffentlichungsnummer: WO 2004/097362

(56) Entgegenhaltungen:
- DD-A- 140 172
- US-A- 3 664 965
- US-A- 3 848 459
- US-A- 4 113 673
- PATENT ABSTRACTS OF JAPAN Bd. 0061, Nr. 29 (P-128), 15. Juli 1982 (1982-07-15) & JP 57 054832 A (HITACHI LTD), 1. April 1982 (1982-04-01)
- PATENT ABSTRACTS OF JAPAN Bd. 2000, Nr. 05, 14. September 2000 (2000-09-14) & JP 2000 035372 A (ISHIKAWAJIMA INSPECTION & INSTRUMENTATION CO), 2. Februar 2000 (2000-02-02)

## Beschreibung

Die Erfindung betrifft ein Verfahren zur Prüfung der Dichtheit von Hohlräume enthaltenden Bauteilen, wobei zumindest an einer Seite des zu prüfenden Bauteils zumindest die zu prüfende Fläche vollständig mit einer schaumbildenden Prüfflüssigkeit benetzt wird.

Grundsätzlich lässt sich das gegenständliche Verfahren und die Prüfflüssigkeit auf verschiedenste Bauteile, welche Hohlräume enthalten, anwenden. Insbesondere kommt das beschriebene Verfahren und die beschriebene Prüfflüssigkeit bei der Prüfung der Dichtheit von Kunststoffverbundbauteilen, insbesondere mit Leichtbaukernen zur Anwendung. Derartige Kunststoffverbundbauteile mit Leichtbaukernen in Form von Wabenbauteilen kommen insbesondere in der Flugzeugtechnik zur Anwendung. Derartige Bauteile weisen ein besonders niedriges Gewicht bei gleichzeitig besonders guten Festigkeitseigenschaften auf.

Zur Qualitätskontrolle von Strukturbauteilen für Flugzeuge werden diese häufig mittels Ultraschall abgetastet. Derartige Methoden sind sehr aufwendig und zeitraubend. Darüber hinaus kann mittels Ultraschall nicht die Dichtheit der Bauteile überprüft werden.

Zur Überprüfung der Dichtheit von Bauteilen, insbesondere Strukturbauteilen von Flugzeugen, wird beispielsweise Gas ins Innere des Flugzeugrumpfs eingebracht und die Außenhülle mit Hilfe eines Gassensors abgetastet. Eine derartige Methode wird beispielsweise in der US 4 976 136 A beschrieben. Dieses Verfahren ist jedoch besonders aufwendig und eignet sich hauptsächlich für abgeschlossene Räume, in welche das Gas eingebracht werden kann.

Ein weiteres Verfahren zur Leckmessung, insbesondere bei Tanks, wird in der WO 02/01175 A1 beschrieben, wobei der Tank dicht umhüllt wird und die Luft zwischen der Umhüllung und der Oberfläche des Tanks abgesaugt wird. Im Falle eines Lecks im Tank wird dieses Vakuum zwischen der Umhüllung und der Tankoberfläche nicht aufrecht erhalten werden können. Abgesehen vom hohen Aufwand dieses Verfahrens ist eine genaue Lokalisierung des Lecks mit dieser Methode nicht möglich.

Die DD 140 172 A beschreibt ein Verfahren zum Auffinden von Leckstellen mittels Schaumbildner, bei dem unter Druck stehende Einrichtungen, insbesondere Fernmeldekabeln, mit einer Seifenlösung versehen werden und allfällige Leckstellen durch den entstehenden Schaumberg entdeckt werden können. Für das Verfahren ist es erforderlich, dass das Innere des zu überprüfenden Körpers in gegebenen Fall der Innenraum eines Fernmeldekabels gegenüber der Umgebung unter Druck steht. Dies ist bei Dichtheitsüberprüfungen mancher Bauteile, wie z.B. Kunststoffverbundbauteilen mit Leichtbaukernen nicht möglich.

Die CA 2 148 844 A zeigt ein Verfahren und eine Einrichtung zur Überprüfung der Dichtheit von Luftbarrieren in Gebäuden, wobei über die zu testende Fläche der Luftbarriere eine Art Saugglocke gestülpt und mit Hilfe eines Ventilators ein Unterdruck erzeugt wird. Die zu testende Fläche wird mit einem schaumbildenden Material bestrichen, wodurch auf Grund von Blasenbildung Leckstellen optisch entdeckt werden können.

Für Kunststoffverbundbauteile in der Flugzeugindustrie werden zur Überprüfung der Dichtheit auch Tauchverfahren eingesetzt, wobei der Kunststoffverbundbauteil in ein mit Flüssigkeit gefülltes Becken getaucht wird und die Flüssigkeit erwärmt wird. Durch den Temperaturanstieg baut die expandierte Luft in den Hohlräumen des Bauteils einen Druck auf, worauf die Luft an allfälligen undichten Stellen entweicht. Das Entweichen der Luft wird durch aufsteigende Blasen im Flüssigkeitsbehälter erkannt. Die undichten Stellen werden lokalisiert und nach dem Herausheben des Bauteils aus dem Flüssigkeitsbehälter markiert. Abgesehen von der aufwendigen Handhabung, insbesondere bei großen Bauteilen, ist mit dieser Methode kein schnelles und sicheres Identifizieren der Fehlerstellen möglich. Darüber hinaus ist das Aufheizen des Wasserbades besonders energie- und zeitaufwendig. Weiters existieren Bestimmungen, gemäß welcher die Bauteile nur kurz, beispielsweise maximal 30 s, im Wasserbecken verbleiben dürfen. Diese Zeit reicht bei großen Bauteilen meist nicht aus, um eine Ortung von Fehlerstellen durchzuführen, weshalb der Vorgang entsprechend oft wiederholt werden muss. Unmittelbar nach der Herausnahme des Bauteils aus dem Bad, muss dieser trockengerieben werden, um zu vermeiden, dass beim Abkühlen der Struktur Feuchtigkeit eingesogen wird.

Beispielsweise beschreibt die JP 57 054832 A ein solches Tauchverfahren zur Überprüfung der Dichtheit von Bauteilen, welches sehr aufwendig in der Handhabung ist und insbesondere bei großen Bauteilen kein schnelles und sicheres Identifizieren der Fehlerstellen ermöglicht. Darüberhinaus ist das Aufheizen eines Wasserbades besonders energie- und zeitaufwendig.

Nach der Detektion von Leckstellen bei derartigen Bauteilen, insbesondere Kunststoffsandwichkörpern, werden diese nach Möglichkeit repariert und danach der Dichtheitstest wiederholt. Die Reparaturen und erneuten Prüfungen werden solange wiederholt, bis sich keine Leckstellen am Bauteil mehr zeigen. Danach wird der geprüfte Bauteil entsprechend markiert und zur weiteren Verwendung freigegeben.

Die Aufgabe der vorliegenden Erfindung besteht in der Schaffung eines Verfahrens zur Prüfung der Dichtheit von Hohlräume enthaltenden Bauteilen, insbesondere Kunststoffverbundbauteilen mit Wabenkernen, welches möglichst rasch und einfach durchführbar ist, und bei dem der zu prüfende Bauteil möglichst wenig beeinflusst wird. Weiters sollen mit dem erfindungsgemäßen Verfahren auch nur Teile der Bauteile auf Dichtheit geprüft werden können und nicht bei jeder Dichtheitsprüfung der gesamte Bauteil geprüft werden müssen. Weiters soll das Verfahren ein schnelles, sicheres und genaues Identifizieren der Fehlerstellen ermöglichen.

Gelöst wird die erfindungsgemäße Aufgabe einerseits dadurch, dass zumindest die zu prüfende Fläche des Bauteils vor der Benetzung mit der Prüfflüssigkeit abgekühlt wird, dass der Bauteil einer Temperaturerhöhung ausgesetzt wird, und dass anschließend die zu prüfende Fläche des Bauteils auf Blasenbildung der Prüfflüssigkeit kontrolliert wird. Im Gegensatz zu bekannten Verfahren wird bei der gegenständlichen Prüfmethode eine raschere und einfachere Dichtheitsprüfung möglich. Da sich der zu prüfende Bauteil nicht unter Wasser befindet, ist auch eine schnellere, sicherere und genauere Identifizierung der Fehlerstellen und in der Folge eine einfache Markierung derselben möglich. Darüber hinaus ist es insbesondere nach der Reparatur von Fehlerstellen nicht notwendig, den gesamten Bauteil auf Dichtheit zu prüfen, sondern es muss nur die die Fehlerstelle enthaltende Fläche des Bauteils einer erneuten Prüfung unterzogen werden. Schließlich wird der zu prüfende Bauteil durch das Aufbringen der Prüfflüssigkeit wesentlich weniger beeinflusst als es beim Eintauchen des Bauteils in ein Wasserbecken der Fall ist. Neben dem Aufbringen der Prüfflüssigkeit ist es lediglich erforderlich, den Bauteil einer ausreichenden Temperaturerhöhung auszusetzen, so dass die in den Hohlräumen des Bauteils, insbesondere im Wabenkern enthaltene Luft, so weit expandiert wird, dass diese über allfällige Undichtheiten entweicht und die darüber angeordnete Prüfflüssigkeit zur Blasenbildung anregt. Dies wird dadurch erreicht, dass zumindest die zu prüfende Fläche des Bauteils vor der Benetzung mit der Prüfflüssigkeit abgekühlt und die erforderliche Temperaturerhöhung lediglich durch die selbständige Erwärmung des Bauteils auf Raumtemperatur allenfalls durch Wärmequellen unterstützt erzielt. Die Abkühlung der zu prüfenden Fläche des Bauteils bzw. des gesamten Bauteils kann durch beliebige Kühleinrichtungen, Kühlkammern oder Kühltunneln, durch welche der Bauteil geschleust wird, erfolgen.

Gemäß einem weiteren Merkmal der Erfindung ist vorgesehen, dass die Abkühlung auf maximal -30°C erfolgt. Bei derartigen Temperaturen ist eine negative Beeinflussung des zu prüfenden Bauteils unwahrscheinlich.

Zusätzlich zur Abkühlung des Bauteils oder alternativ dazu kann zumindest die zu prüfende Fläche des Bauteils auch nach der Benetzung mit der Prüfflüssigkeit erwärmt werden. Durch diese Erwärmung wird die für die Dichtheitsprüfung erforderliche Temperaturerhöhung erzielt.

Gelöst wir die erfindungsgemäße Aufgabe auch dadurch, dass zumindest die zu prüfende Fläche des Bauteils durch Bestrahlung von der der zu prüfenden Fläche gegenüberliegenden Seite des zu prüfenden Bauteils erwärmt wird und dass anschließend die zu prüfende Fläche des Bauteils auf Blasenbildung der Prüfflüssigkeit kontrolliert wird. Zum Zwecke der Erwärmung kann beispielsweise eine Halogenlampe in einem bestimmten Abstand von einigen Zentimetern an der Hinterseite des zu prüfenden Bauteils positioniert werden.

Dabei kann zumindest die zu prüfende Fläche des Bauteils durch Infrarotbestrahlung erwärmt werden.

Um eine negative Beeinflussung des zu prüfenden Bauteils möglichst zu vermeiden, erfolgt die Erwärmung vorzugsweise auf maximal 80°C.

Die Variante der Abkühlung des Bauteils vor der Benetzung mit der Prüfflüssigkeit ist insbesondere für komplexere Bauteile von Vorteil, bei welchen die Erwärmung mittels einer Lampe oder anderen Wärmequellen von der Rückseite des Bauteils nicht oder nicht leicht möglich wäre. Darüber hinaus ist mit der Methode der Abkühlung des Bauteils vor der Benetzung mit der Prüfflüssigkeit eine gleichzeitige Untersuchung beider Oberflächen des Bauteils einfacher möglich als bei der Methode der Erwärmung mittels einer Lampe oder dergl.

Gemäß einem Merkmal der Erfindung werden die gegenüberliegenden Seiten zumindest der zu prüfenden Fläche des Bauteils mit der Prüfflüssigkeit benetzt. Dadurch ist eine gleichzeitige Überprüfung beider Oberflächen des Bauteils bzw. des zu prüfenden Teils des Bauteils möglich.

Die Stellen mit Blasenbildung werden nach ihrer Identifizierung markiert, um eine nachträgliche Reparatur des Bauteils zu erleichtern. Dabei kann die Markierung von Hand aus aber auch automatisch erfolgen. Zur automatischen Markierung kann die zu prüfende Fläche beispielsweise mit Hilfe einer Kamera abgetastet werden und die Blasenbildung mit Hilfe eines Bildverarbeitungsverfahrens erkannt werden und danach die Markierung an der entsprechenden Stelle, beispielsweise mit einem Roboterarm oder dergl., angebracht werden.

Die Prüfflüssigkeit kann beispielsweise zumindest auf die zu prüfende Fläche des Bauteils oder auch auf alle Flächen des Bauteils aufgestrichen oder auch aufgesprüht werden. Ebenso ist es möglich, dass der zu prüfende Bauteil durch einen durch herabfließende Prüfflüssigkeit gebildeten Vorhang hindurchgeführt wird. Das jeweilige Verfahren zur Aufbringung der Prüfflüssigkeit muss auch an die Gestalt des zu prüfenden Bauteils bzw. der zu prüfenden Fläche des Bauteils angepasst werden.

Nach dem Prüfverfahren wird die Prüfflüssigkeit, vorzugsweise mit Wasser, abgewaschen. Dieser Waschvorgang erfolgt vorzugsweise in einer automatischen Waschstraße.

Bessere Reinigungsergebnisse werden erzielt, wenn der Waschvorgang unter Druck erfolgt und wenn der Waschvorgang allenfalls mechanisch unterstützt wird. Diese mechanische Unterstützung kann beispielsweise durch Bürsten, Schwämme oder dergl. realisiert werden.

Die Prüfflüssigkeit zur Anwendung bei der Prüfung der Dichtheit von Hohlräume enthaltenden Bauteilen enthält vorzugsweise 10% bis 20% gelöste Tenside, 2% bis 6% Alkohol und 75% bis 88% Wasser. Bei den angegebenen Prozenten handelt es sich um Volumsprozente. Durch die angegebene Zusammensetzung der Prüfflüssigkeit wird eine vollständige Benetzung, d.h. ein geschlossener Film, der Prüfflüssigkeit auf der zu prüfenden Fläche des Bauteils erreicht. Darüber hinaus ist eine derartige Prüfflüssigkeit besonders leicht und rückstandsfrei abwaschbar und beeinflusst die Oberfläche des zu prüfenden Bauteils nicht. Weiters ist eine derartige Prüfflüssigkeit nicht gesundheitsschädlich und umweltschädlich, so dass eine Entsorgung über die öffentliche Kanalisation möglich ist. Die Dichtheitsprüfflüssigkeit der angegebenen Art kann besonders einfach aufgebracht werden, insbesondere auch maschinell, und schäumt bei der Aufbringung nicht. Die Prüfflüssigkeit ist für einen Einsatz in Temperaturbereichen zwischen -30°C und 80°C geeignet. Darüber hinaus ist eine Wiederholung des Prüfverfahrens nach erfolgter Trocknung der Prüfflüssigkeit möglich, da die angegebene Prüfflüssigkeit keinen Verschluss einer allfälligen Leckstelle verursacht.

Durch die Zusammensetzung wird eine Oberflächenspannung der Prüfflüssigkeit erzielt, welche es erlaubt, dass gebildete Blasen möglichst lange über der Leckstelle stehen bleiben und wenig bis gar nicht zusammenfallen. Dies soll insbesondere auch an vertikalen Flächen der zu prüfenden Bauteile möglich sein.

Zusätzlich können bis zu 5% Hilfsstoffe in der Dichtheitsprüfflüssigkeit enthalten sein. Mit Hilfe derartiger Hilfsstoffe können verschiedene Eigenschaften erzielt werden.

Weiters können anionische, kationische oder nichtionische Tenside enthalten sein.

Zur Erhöhung der Stabilität der schaumbildenden Prüfflüssigkeit sind vorzugsweise dreiwertige Alkohole, insbesondere Glycerin, in den angegebenen Anteilen enthalten. Dadurch wird auch erzielt, dass der Film der Prüfflüssigkeit an der Oberfläche des zu prüfenden Bauteils möglichst lange geschlossen bleibt.

Um einen ausreichenden Kontrast auf der Oberfläche des zu prüfenden Bauteils zu erreichen, können Farbpigmente als Hilfsstoff in der Prüfflüssigkeit enthalten sein. Die Farbe wird in Abhängigkeit der Farbe der Oberfläche des zu prüfenden Bauteils ausgewählt.

Weiters können auch Duftstoffe als Hilfsstoff enthalten sein.

Die vorliegende Erfindung wird anhand der beigefügten Zeichnungen näher erläutert.

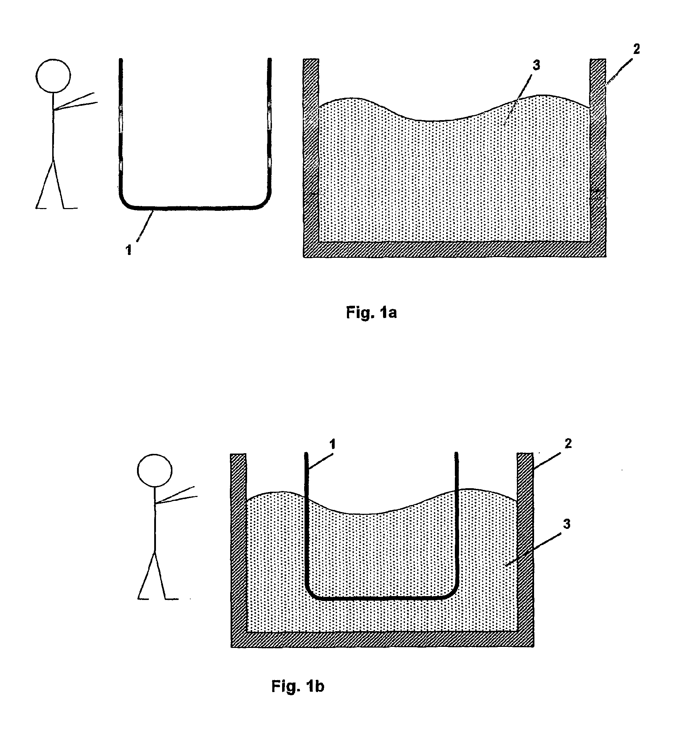

Darin zeigen: Fig. 1a und 1b schematisch die Anwendung eines herkömmlichen Tauchverfahrens zur Prüfung der Dichtheit von Kernverbunden;
Fig. 2a und 2b schematisch das erfindungsgemäße Verfahren zur Dichtheitsprüfung von Hohlräumen enthaltenden Bauteilen;
Fig. 3a und 3b Schnittbilder durch einen Teil eines zu prüfenden Bauteils bei der Anwendung des Tauchverfahrens gemäß dem Stand der Technik;
Fig. 4a und 4b einen Teil des zu prüfenden Bauteils in geschnittener Darstellung bei der Anwendung des erfindungsgemäßen Verfahrens; und
Fig. 5 und Fig. 6 zwei mögliche Anordnungen des erfindungsgemäßen Verfahrens.

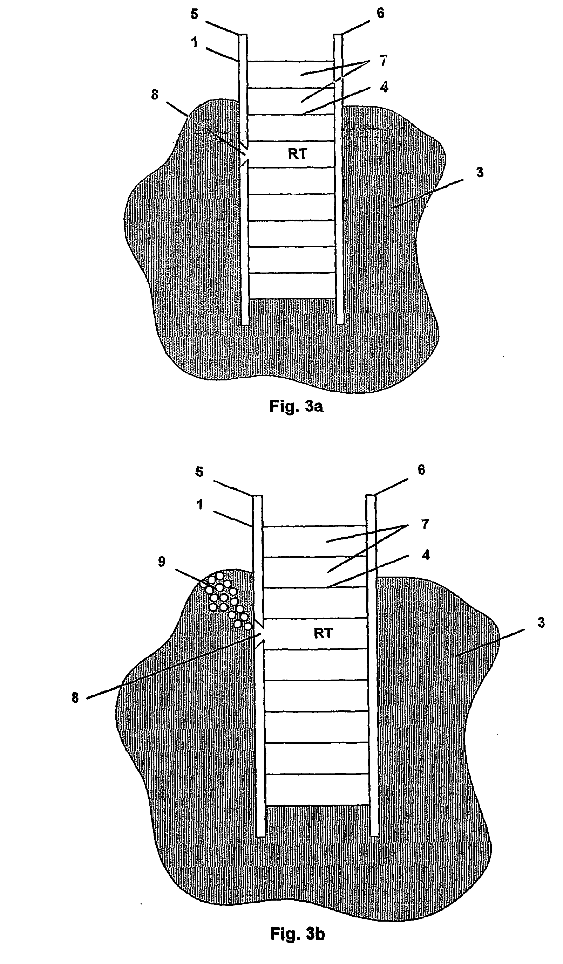

Fig. 1a und 1b zeigen schematisch ein Dichtheitsprüfverfahren nach dem Stand der Technik, wobei der zu prüfende Bauteil 1 in einem Behälter 2 mit einer Flüssigkeit 3, insbesondere Wasser, eingebracht wird. Der zu prüfende Bauteil 1 befindet sich vor dem Tauchvorgang in Raumtemperatur und wird danach gemäß Fig. 1b vollständig in die Flüssigkeit 3, welche auf beispielsweise 70°C aufgewärmt wurde, eingetaucht. In den Detailansichten gemäß Fig. 3a und 3b wird ein Teil des zu prüfenden Bauteils in geschnittener Darstellung gezeigt. Der Bauteil 1 besteht beispielsweise aus einem Leichtbaukern 4, insbesondere einem Wabenkern, und beidseitig angeordneten Deckschichten 5, 6, beispielsweise sog. Prepreg-Lagen aus imprägniertem Kohlenstofffasergewebe. Der Leichtbaukern 4 enthält Hohlkammern 7, in welchen sich üblicherweise Luft befindet. Wird der Bauteil 1 nun in die Flüssigkeit 3 eingetaucht, welche eine höhere Temperatur aufweist als der Bauteil 1 vor dem Eintauchen in die Flüssigkeit 3, so dehnt sich die Luft in den Hohlkammern 7 aus. Sollte eine Leckstelle 8 vorhanden sein, entweicht die sich ausdehnende Luft der Hohlkammer 7 über diese Leckstelle 8 und bildet in der Flüssigkeit 3 entsprechende Luftblasen 9. Das Aufsteigen der Luftblasen 9 wird beobachtet und identifiziert und entweder unter Wasser mit einem entsprechenden wasserfesten Stift oder dergl. markiert oder erst nach der Herausnahme des Bauteils 1 aus dem Becken 2 angezeichnet. Durch die aufsteigenden Luftblasen 9 ist eine genaue Identifizierung der Leckstelle 8 meist nicht möglich. Darüber hinaus ist es auch bei wiederholten Dichtheitsprüfungen des Bauteils 1 immer erforderlich, den gesamten Bauteil 1 vollständig in die Flüssigkeit 3 im Behälter 2 einzutauchen.

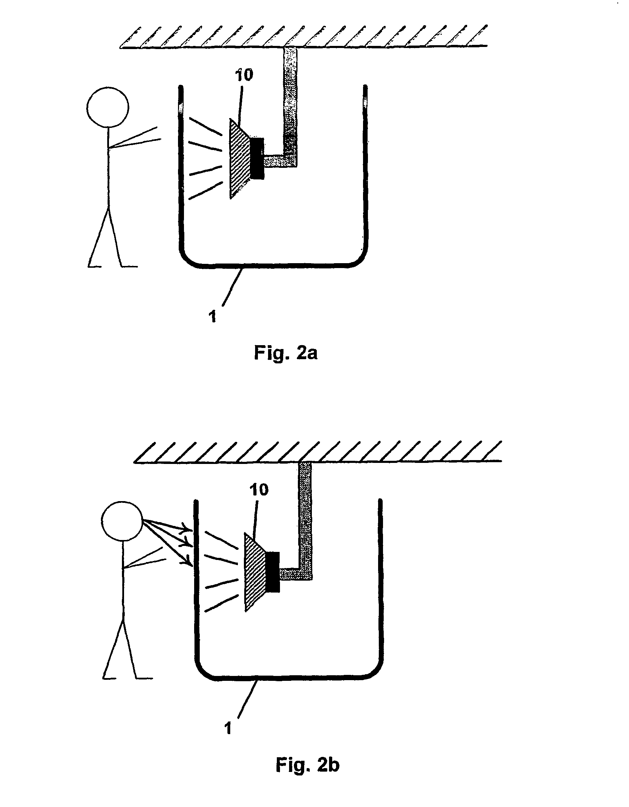

Fig. 2a und 2b zeigen schematisch eine Variante des erfindungsgemäßen Verfahrens, wobei der Bauteil 1 zumindest an der zu prüfenden Fläche mit einer Prüfflüssigkeit benetzt wird und danach der Bauteil 1 einer Temperaturerhöhung ausgesetzt wird. Diese Temperaturerhöhung von Raumtemperatur, beispielsweise auf 80°C, kann mit einer Lampe 10 erfolgen, welche von der Rückseite der zu prüfenden Fläche den Bauteil 1 bestrahlt und entsprechend erhitzt. Durch die Erwärmung der zu prüfenden Fläche des Bauteils 1 kommt es zu einer Ausdehnung der in den hohen Kammern 7 enthaltenen Luft und zu einer allfälligen Entweichung über Leckstellen, wodurch es durch die aufgebrachte Prüfflüssigkeit zu einer Blasenbildung kommt und somit eine eindeutige und sichere Identifizierung der Fehlstellen möglich wird.

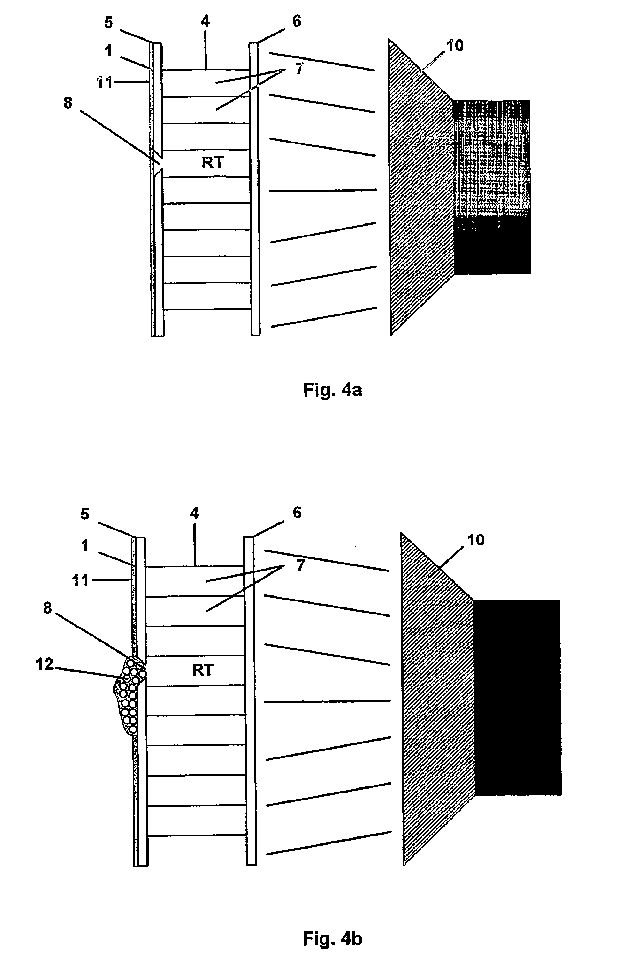

Die Fig. 4a und 4b zeigen einen Teil des zu prüfenden Bauteils 1 in geschnittener Darstellung unter Verwendung des erfindungsgemäßen Verfahrens gemäß den Figuren 2a und 2b. Die Oberfläche der Deckschicht 5 des Bauteils 1 ist vollständig mit einem Film der Prüfflüssigkeit 11 benetzt. Beispielsweise mit Hilfe einer Lampe 10 wird der Bauteil 1 auf eine Temperatur erwärmt, die ausreicht, dass die in den Hohlräumen 7 enthaltene Luft soweit expandiert wird, dass sie über allfällige Leckstellen 8 im Bauteil 1 entweicht. Die entweichende Luft bildet Blasen 12 aus der Prüfflüssigkeit 11. Ein wesentlicher Vorteil des vorliegenden Verfahrens ist es, dass nicht der gesamte Bauteil 1 in eine Flüssigkeit getaucht werden muss, sondern lediglich die zu prüfende Fläche mit einer Prüfflüssigkeit 11 benetzt werden muss und der Bauteil 1 einer Temperaturerhöhung ausgesetzt werden muss.

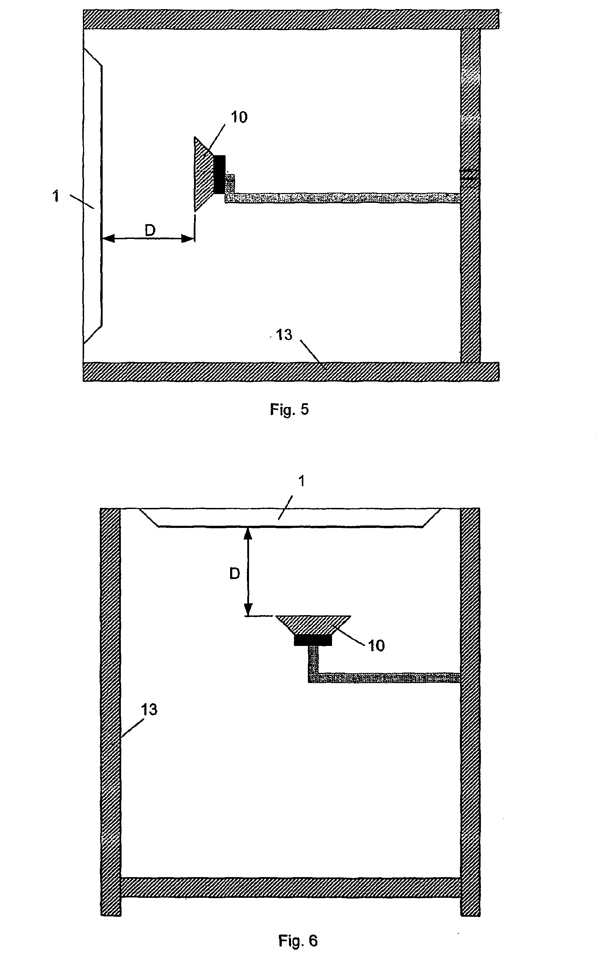

Fig. 5 und 6 zeigen zwei Verfahrensanordnungen, bei welchen der zu testende Bauteil 1 mit einer Lampe 10 erwärmt wird, welche sich in einem Abstand D vom Bauteil 1 befindet. Die Lampe 10 kann aus einem Rahmen 13 befestigt sein und auch beweglich sein, so dass der ganze Bauteil 1 von der Lampe 10 abgetastet werden kann.

Alternativ zu den in den Figuren 2a, 2b, 4a, 4b und 5 und 6 gezeigten Varianten kann der Bauteil 1 auch vor der Benetzung mit der Prüfflüssigkeit 11 abgekühlt werden und nach der Benetzung mit der Prüfflüssigkeit 11 lediglich auf Raumtemperatur erwärmt werden, wodurch die in den Hohlkammern 7 des Bauteils 1 enthaltene Luft expandiert und über allfällige Leckstellen 8 entweicht. Vorzugsweise geschieht ein derartiges Prüfverfahren automatisch, indem die zu prüfenden Bauteile 1 durch entsprechende Kühl- oder Erwärmungszonen geführt werden und die Prüfflüssigkeit automatisch auf die zu prüfenden Bauteile aufgebracht wird. Nach der Prüfung wird die Prüfflüssigkeit 11, vorzugsweise durch Wasser, eventuell mechanisch unterstützt, abgespült. Danach werden die Bauteile der weiteren Verwendung zugeführt, beispielsweise lackiert.

## Patentansprüche

1. Verfahren zur Prüfung der Dichtheit von Hohlräume (7) enthaltenden Bauteilen (1) wobei zumindest an einer Seite des zu prüfenden Bauteils zumindest die zu prüfende Fläche vollständig mit einer schaumbildenden Prüfflüssigkeit (11) benetzt wird, **dadurch gekennzeichnet, dass** zumindest die zu prüfende Fläche des Bauteils vor der Benetzung mit der Prüfflüssigkeit abgekühlt wird, dass der Bauteil einer Temperaturerhöhung ausgesetzt wird, und dass anschließend die zu prüfende Fläche des Bauteils auf Blasenbildung der Prüfflüssigkeit kontrolliert wird.

2. Prüfverfahren nach Anspruch 1, **dadurch gekennzeichnet, dass** die Abkühlung auf maximal -30°C erfolgt.

3. Prüfverfahren nach Anspruch 1 oder 2, **dadurch gekennzeichnet, dass** zumindest die zu prüfende Fläche des Bauteils nach der Benetzung mit der Prüfflüssigkeit erwärmt wird.

4. Verfahren zur Prüfung der Dichtheit von Hohlräume (7) enthaltenden Bauteilen (1) wobei zumindest an einer Seite des zu prüfenden Bauteils zumindest die zu prüfende Fläche vollständig mit einer schaumbildenden Prüfflüssigkeit (11) benetzt wird, **dadurch gekennzeichnet, dass** zumindest die zu prüfende Fläche des Bauteils durch Bestrahlung von der der zu prüfenden Fläche gegenüberliegenden Seite des zu prüfenden Bauteils erwärmt wird, und dass anschließend die zu prüfende Fläche des Bauteils auf Blasenbildung der Prüfflüssigkeit kontrolliert wird.

5. Prüfverfahren nach Anspruch 4, **dadurch gekennzeichnet, dass** zumindest die zu prüfende Fläche des Bauteils durch Infrarotbestrahlung erwärmt wird.

6. Prüfverfahren nach Anspruch 4 oder 5, **dadurch gekennzeichnet, dass** die Erwärmung auf maximal 80°C erfolgt.

7. Prüfverfahren nach einem der Ansprüche 1 bis 6, **dadurch gekennzeichnet, dass** die gegenüberliegenden Seiten zumindest der zu prüfenden Fläche des Bauteils mit der Prüfflüssigkeit benetzt werden.

8. Prüfverfahren nach einem der Ansprüche 1 bis 7, **dadurch gekennzeichnet, dass** Stellen mit Blasenbildung markiert werden.

9. Prüfverfahren nach einem der Ansprüche 1 bis 8, **dadurch gekennzeichnet, dass** die Prüfflüssigkeit zumindest auf die zu prüfende Fläche des Bauteils aufgestrichen wird.

10. Prüfverfahren nach einem der Ansprüche 1 bis 8, **dadurch gekennzeichnet, dass** die Prüfflüssigkeit zumindest auf die zu prüfende Fläche des Bauteils aufgesprüht wird.

11. Prüfverfahren nach einem der Ansprüche 1 bis 10, **dadurch gekennzeichnet, dass** die Prüfflüssigkeit nach der Prüfung, vorzugsweise mit Wasser, abgewaschen wird.

12. Prüfverfahren nach Anspruch 11, **dadurch gekennzeichnet, dass** der Waschvorgang unter Druck erfolgt.

13. Prüfverfahren nach Anspruch 11 oder 12, **dadurch gekennzeichnet, dass** der Waschvorgang mechanisch unterstützt wird.

## Claims

1. A method for leak-testing components (1) having cavities (7), wherein on at least one side of the component to be tested, at least the area to be tested is completely wetted with a foam-forming testing liquid (11), **characterized in that** at least the component's area to be tested is cooled before being wetted with the testing liquid, **in that** the component is subjected to a temperature increase and **in that** subsequently the component's area to be tested is checked for a bubble formation of the testing liquid.

2. A testing method according to claim 1, **characterized in that** the cooling is effected to -30°C at the most.

3. A testing method according to claim 1 or 2, **characterized in that** at least the component's area to be tested is heated after having been wetted with the testing liquid.

4. A method for leak-testing components (1) having cavities (7), wherein on at least one side of the component to be tested, at least the area to be tested is completely wetted with a foam-forming testing liquid (11), **characterized in that** at least the component's area to be tested is heated by irradiation from that side of the component to be tested which is located opposite the area to be tested, and **in that** subsequently the component's area to be tested is checked for a bubble formation of the testing liquid.

5. A testing method according to claim 4, **characterized in that** at least the component's area to be tested is heated by infrared irradiation.

6. A testing method according to claim 4 or 5, **characterized in that** the warming is effected to 80°C at the most.

7. A testing method according to any one of claims 1 to 6, **characterized in that** the oppositely arranged sides at least of the component's area to be tested are wetted with the testing liquid.

8. A testing method according to any one of claims 1 to 7, **characterized in that** the sites exhibiting bubble formation are marked.

9. A testing method according to any one of claims 1 to 8, **characterized in that** the testing liquid is applied by brushing to at least the component's area to be tested.

10. A testing method according to any one of claims 1 to 8, **characterized in that** the testing liquid is applied by spraying to at least the component's area to be tested.

11. A testing method according to any one of claims 1 to 10, **characterized in that** after said testing, the testing liquid is removed by washing, preferably with water.

12. A testing method according to claim 11, **characterized in that** the washing process is effected under pressure.

13. A testing method according to claim 11 or 12, **characterized in that** the washing process is mechanically assisted.

## Revendications

1. Procédé pour contrôler l'étanchéité d'éléments de construction (1) contenant des cavités (7), sur au moins un côté de l'élément de construction à contrôler au moins la surface à contrôler étant entièrement mouillée avec un liquide d'essai (11) moussant, **caractérisé en ce qu'**au moins la surface à contrôler de l'élément de construction est refroidie avant le mouillage avec le liquide d'essai, **en ce que** l'élément de construction est soumis à une augmentation de la température, et **en ce qu'**ensuite la surface à contrôler de l'élément de construction est contrôlée quant à la formation de bulles du liquide d'essai.

2. Procédé de contrôle selon la revendication 1, **caractérisé en ce que** le refroidissement maximum s'effectue à -30 °C.

3. Procédé de contrôle selon la revendication 1 ou 2, **caractérisé en ce qu'**au moins la surface à contrôler de l'élément de construction est chauffée après mouillage avec le liquide d'essai.

4. Procédé pour contrôler l'étanchéité d'éléments de construction (1) contenant des cavités (7), sur au moins un côté de l'élément de construction à contrôler au moins la surface à contrôler étant entièrement mouillée avec un liquide d'essai (11) moussant, **caractérisé en ce qu'**au moins la surface à contrôler de l'élément de construction est chauffée par irradiation depuis le côté, opposé à la surface à contrôler, de l'élément de construction à contrôler, et **en ce qu'**ensuite la surface à contrôler de l'élément de construction est contrôlée quant à la formation de bulles du liquide d'essai.

5. Procédé de contrôle selon la revendication 4, **caractérisé en ce qu'**au moins la surface à contrôler de l'élément de construction est chauffée par rayonnement infrarouge.

6. Procédé de contrôle selon la revendication 4 ou 5, **caractérisé en ce que** le chauffage s'effectue à 80 °C au maximum.

7. Procédé de contrôle selon l'une des revendications 1 à 6, **caractérisé en ce que** les côtés opposés d'au moins la surface à contrôler de l'élément de construction sont mouillés avec le liquide d'essai.

8. Procédé de contrôle selon l'une des revendications 1 à 7, **caractérisé en ce que** les emplacements avec formation de bulles sont marqués.

9. Procédé de contrôle selon l'une des revendications 1 à 8, **caractérisé en ce que** le liquide d'essai est appliqué au pinceau au moins sur la surface à contrôler de l'élément de construction.

10. Procédé de contrôle selon l'une des revendications 1 à 8, **caractérisé en ce que** le liquide d'essai est pulvérisé sur au moins la surface à contrôler de l'élément de construction.

11. Procédé de contrôle selon l'une des revendications 1 à 10, **caractérisé en ce que** le liquide d'essai est lavé après le contrôle, de préférence à l'eau.

12. Procédé de contrôle selon la revendication 11, **caractérisé en ce que** le processus de lavage s'effectue sous pression.

13. Procédé de contrôle selon la revendication 11 ou 12, **caractérisé en ce que** le processus de lavage est favorisé mécaniquement.
